# EUROPEAN PATENT APPLICATION

(11) **EP 4 527 538 A1**
(43) Date of publication of application: **26.03.2025**
(21) Application number: 23816147.5
(22) Date of filing: 01.06.2023
(51) Int. Cl.: B23K 11/14, B23K 11/00, C22C 38/00, C22C 38/04

(54) **PROJECTION-WELDED JOINT AND PRODUCTION METHOD FOR PROJECTION-WELDED JOINT**

(30) Priority: 01.06.2022 JP 2022089552
(71) Applicant: NIPPON STEEL CORPORATION, Chiyoda-ku Tokyo 100-8071 (JP)
(72) Inventor: OKADA, Tohru, Tokyo 100-8071 (JP); FUJIMOTO, Hiroki, Tokyo 100-8071 (JP); FURUSAKO, Seiji, Tokyo 100-8071 (JP)
(74) Representative: Vossius & Partner Patentanwälte Rechtsanwälte mbB
(86) International application number: PCT/JP2023/020485
(87) International publication number: WO 2023/234390

(57) **Abstract**

A projection welded joint according to one aspect of the present disclosure includes a steel sheet, a steel member, and a projection weld joining the steel sheet and the steel member, the projection weld includes a melted and solidified portion and a corona bond area around the melted and solidified portion, the steel sheet has a carbon content at a thickness center of 0.25 mass% or more, and the corona bond area includes an outer end portion having a hardness lower than that at a position of 1/4 of a sheet thickness of the steel sheet outside the corona bond area. The steel sheet preferably includes a softened layer, in a range from the surface on the side to which the steel member is joined to a depth of 20 µm, having a hardness of 95% or less of that at the position of 1/4 of the steel sheet thickness.

## Description

### Technical Field

The present disclosure relates to a projection welded joint and a method for manufacturing a projection welded joint.

Priority is claimed on Japanese Patent Application No. 2022-089552, filed June 1, 2022, the content of which is incorporated herein by reference.

### Background Art

In recent years, in the field of automobiles, there has been an increasing need to use a high strength steel sheet for a vehicle body, a component, and the like in order to reduce the weight of the vehicle body for the purpose of reducing fuel consumption and carbon dioxide emission, and in order to improve collision safety. For example, a structural member for a vehicle, such as a frontside member, a center pillar, or a hinge reinforcement, adopts a constitution in which a steel member such as a nut is welded to a component including a high strength steel sheet.

In manufacturing a structural member for a vehicle by joining a steel member, a method is generally adopted in which a nut is joined to a surface of a high strength steel sheet using a projection welding method. Projection welding is resistance welding in which a projection formed at a portion to be welded in one base metal is brought into contact with a portion to be welded in another base metal and a current is passed so that generation of resistance heat is limited to a relatively small specific portion. In projection welding of a nut to a steel sheet, a nut provided with a plurality of projections is pressurized against a steel sheet, and these projections are energized to locally heat a contact interface between each projection and the steel sheet, thus causing melting and solidification or solid phase joining.

However, such a projection welded joint including a high strength steel sheet has a problem of hydrogen embrittlement of the weld. As the strength of the steel is improved, an adverse effect of the hydrogen embrittlement becomes more significant.

Regarding projection welding, for example, Patent Document 1 discloses a method for manufacturing a sintered component for welding. The sintered component includes an iron-carbon-based alloy and is used for welding, and the method is characterized in that a portion to be a weld in a green compact is locally heated and decarburized after powder molding and before sintering.

Patent Document 2 discloses a power transmission high-strength drive shaft in which a balance weight is joined by projection welding to a part of a hollow shaft included in the drive shaft. The hollow shaft is a steel pipe having a tensile strength of 70 kgf/mm² or more, and a joint portion between the steel pipe and the balance weight has a ratio (d/D), which is the ratio of the diameter d of the joint portion to the diameter D of a projection, of 0.6 to 1.0.

Patent Document 3 discloses a projection welding method in which, in welding of one member and another member at least one of which is coated with aluminum, a welding process is divided into three stages of a first stage using a small current, a second stage using a large current, and a third stage using a medium current.

### Citation List

### Patent Documents

Patent Document 1
   Japanese Unexamined Patent Application, First Publication No. H06-49504
Patent Document 2
   Japanese Unexamined Patent Application, First Publication No. H07-317844
Patent Document 3
   Japanese Unexamined Patent Application, First Publication No. 2004-42089

### Summary of Invention

### Technical Problem

Patent Documents 1 to 3 propose methods of preventing hydrogen embrittlement cracks by devising the shape or component of a projection portion of a steel member or devising a welding condition. However, these methods have problems such as an increase in tact time and restrictions on nut shape and welding conditions.

A steel member to be subjected to projection welding generally has a plurality of projections. In projection welding, the steel member is energized while pressurized against a steel sheet in a state where the projections are in contact with the surface of the steel sheet. The plurality of projections and the regions in contact with the projections are energized at a high current density, and thus the plurality of projections and the periphery of each projection are simultaneously heated to form a melted and solidified portion. This makes it difficult to prevent hydrogen embrittlement cracks through optimization of welding conditions. Because it is difficult to strictly apply the same welding pressure and the same amount of heat input at the plurality of projections. Even when the optimum welding conditions are satisfied at some projections, if a welding condition at another projection is inappropriate, hydrogen embrittlement cracks cannot be suppressed in the projection welded joint. Furthermore, considering a dimensional error, it is also difficult to form the completely same shape of the plurality of projections of the steel member. This also makes it difficult to suppress hydrogen embrittlement cracks.

In the technical field of spot welding, various methods of suppressing hydrogen embrittlement have been proposed. Spot welding is a kind of resistance welding, as projection welding. However, a method of suppressing hydrogen embrittlement in spot welding is difficult to use in projection welding. Because an energization heat generation phenomenon in spot welding is completely different from that in projection welding. In spot welding, two or more overlaid metal sheets are energized and heated while pinched with rod-shaped electrodes. At this time, the metal sheets as base metals are in surface contact. Therefore, the shape of an energization path in spot welding is completely different from that in projection welding. In spot welding, it is not necessary to strictly apply the same welding pressure and the same amount of heat input at a plurality of welds. Therefore, spot welding does not have the above-described problems in projection welding. This also makes a method of suppressing hydrogen embrittlement in spot welding difficult to use in projection welding.

In view of the above circumstances, an object of the present disclosure is to provide a projection welded joint that includes a steel member and a steel sheet having an internal carbon content of 0.25 mass% or more and is capable of suppressing hydrogen embrittlement of a plurality of welds, and to provide a method for manufacturing the projection welded joint.

### Solution to Problem

The gist of the present disclosure is as follows.

(1) A projection welded joint according to one aspect of the present disclosure includes a steel sheet, a steel member, and a projection weld joining the steel sheet and the steel member, the projection weld includes a melted and solidified portion and a corona bond area around the melted and solidified portion, the steel sheet has a carbon content at a thickness center of 0.25 mass% or more, and the corona bond area includes an outer end portion having a hardness lower that the hardness at a position of 1/4 of a sheet thickness of the steel sheet outside the corona bond area.
(2) In the projection welded joint of (1), the steel sheet preferably includes a softened layer in a range from a surface, on a side to which the steel member is joined, to a depth of 20 µm, and the softened layer preferably has a hardness of 95% or less of the hardness at the position of 1/4 of the sheet thickness of the steel sheet.
(3) In the projection welded joint of (2), the steel sheet preferably includes a portion, in a range from the surface on the side to which the steel member is joined to a depth of 20 µm to 200 µm, having a hardness of 95% of the hardness at the position of 1/4 of the sheet thickness of the steel sheet.
(4) In the projection welded joint of any one of (1) to (3), the outer end portion of the corona bond area preferably has a Vickers hardness of 700 Hv or less.
(5) In the projection welded joint of any one of (1) to (4), the projection welded joint preferably includes a plurality of the melted and solidified portions, and a cross-sectional area of a first melted and solidified portion in a cross section along a sheet thickness direction of the steel sheet is preferably 1.5 times or more a cross-sectional area of the second melted and solidified portion in a cross section along the sheet thickness direction of the steel sheet.
(6) A method for manufacturing a projection welded joint, according to another aspect of the present disclosure, is a method for manufacturing the projection welded joint of any one of (1) to (5), and includes pressing a projection portion of a steel member against a steel sheet and energizing the projection portion to perform projection welding, and in the method, the steel sheet has a carbon content at a thickness center of 0.25 mass% or more, the steel sheet includes a softened layer in a range from a surface, on a side against which the projection portion is pressed, to a depth of 20 µm, and the softened layer has a hardness of 95% or less of a hardness at a position of 1/4 of a sheet thickness of the steel sheet.
(7) In the method for manufacturing a projection welded joint of (6), the steel sheet preferably includes a portion, in a range from the surface on the side against which the projection portion is pressed to a depth of 20 µm to 200 µm, having a hardness of 95% of the hardness at the position of 1/4 of the sheet thickness of the steel sheet.

### (Supplement)

(1) A projection welded joint according to one aspect of the present disclosure includes a steel sheet, a steel member joined to a surface of the steel sheet, and a plurality of welds that are provided at rotationally symmetric positions in a plane view along the direction perpendicular to the surface of the steel sheet and join the steel sheet and the steel member, each of the plurality of welds includes a melted and solidified portion and includes a pressure-contact surface and a heat affected zone that are formed around the melted and solidified portion, the steel sheet includes a base material portion, outside the heat affected zone, having an internal carbon content of 0.25 mass% or more, and the steel sheet includes a surface layer area, at an outer end portion of the pressure-contact surface, having a Vickers hardness lower than the Vickers hardness at a thickness 1/4 portion of the base material portion in the steel sheet in all of a plurality of cross sections that respectively pass through lines connecting the centers of the plurality of welds and the rotation center of the plurality of welds and are perpendicular to the surface of the steel sheet.
(2) In the projection welded joint described in (1), the base material portion of the steel sheet may have a decarburized layer on a surface on a side to which the steel member is joined, and the decarburized layer may include a region having a hardness lower by 5% or more than the Vickers hardness at the thickness 1/4 portion of the base material portion and having a depth of 5 to 200 µm.
(3) In the projection welded joint described in (1) or (2), the Vickers hardness of the surface layer area in the steel sheet at the outer end portion of the pressure-contact surface may be 700 HV or less in all of the plurality of cross sections.
(4) In the projection welded joint described in any one of (1) to (3), a ratio Amax/Amin may be 1.5 or more, and the ratio Amax/Amin is the ratio between an absolute maximum value Amax of cross-sectional areas of a plurality of the melted and solidified portions measured in the plurality of cross sections and an absolute minimum value Amin of the cross-sectional areas of the plurality of the melted and solidified portions.
(5) In the projection welded joint described in any one of (1) to (4), the steel sheet may be a hot stamped steel sheet.
(6) In the projection welded joint described in any one of (1) to (5), the steel member may be a nut.
(7) A component for a vehicle, according to another aspect of the present disclosure, includes the projection welded joint described in any one of (1) to (6).
(8) A method for manufacturing a projection welded joint, according to another aspect of the present disclosure, includes a step of subjecting a plurality of projections for projection welding included in a steel member to projection welding to a surface of a steel sheet to form a plurality of welds, and in the projection welding, the plurality of welds are disposed at rotationally symmetric positions in a plane view along the direction perpendicular to the surface of the steel sheet, each of the plurality of welds includes a melted and solidified portion and includes a pressure-contact surface and a heat affected zone around the melted and solidified portion, the steel sheet has an internal carbon content of 0.25 mass% or more, and the steel sheet includes a surface layer area, at an outer end portion of the pressure-contact surface, having a Vickers hardness set to be lower than the Vickers hardness at a thickness 1/4 portion of the base material portion outside the heat affected zone in the steel sheet in all of a plurality of cross sections that respectively pass through lines connecting the centers of the plurality of welds and the rotation center of the plurality of welds and are perpendicular to the surface of the steel sheet.
(9) In the method for manufacturing a projection welded joint described in (8), the steel sheet may be a steel sheet having a decarburized layer on the surface, and the decarburized layer may include a region having a hardness lower by 5% or more than the Vickers hardness at the thickness 1/4 portion of the steel sheet and having a depth of 5 to 200 µm.

### Advantageous Effects of Invention

According to the present disclosure, it is possible to provide a projection welded joint that includes a steel member and a steel sheet having an internal carbon content of 0.25 mass% or more and is capable of suppressing hydrogen embrittlement of a plurality of welds, and to provide a method for manufacturing the projection welded joint.

### Brief Description of Drawings

FIG. 1 is a cross-sectional view of a projection welded joint according to the present embodiment.
FIG. 2 is an enlarged cross-sectional view of a weld of a projection welded joint according to the present embodiment.
FIG. 3 is a plan view of a projection welded joint according to the present embodiment.
FIG. 4 is a schematic view of a crack generated in a conventional projection welded joint.

### Description of Embodiments

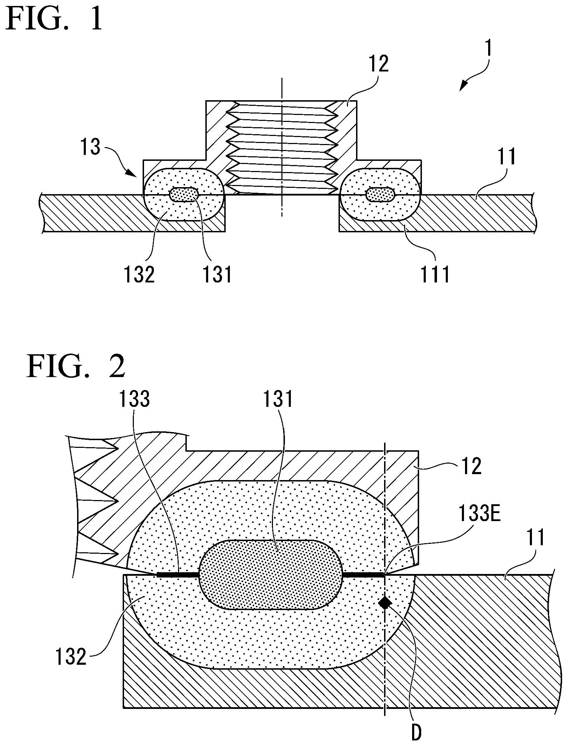

As illustrated in FIGS. 1 to 3, a projection welded joint 1 according to one aspect of the present disclosure includes a steel sheet 11, a steel member 12, and a projection weld 13 joining the steel sheet 11 and the steel member 12, the projection weld 13 includes a melted and solidified portion 131 and a corona bond area 133 around the melted and solidified portion 131, the steel sheet 11 has a carbon content at a thickness center of 0.25 mass% or more, and the corona bond area 133 includes an outer end portion 133E having a hardness lower that the hardness at a position of 1/4 of a sheet thickness of the steel sheet 11 outside the corona bond area 133.

First, technical concepts of the projection welded joint 1 according to the present embodiment will be described below.

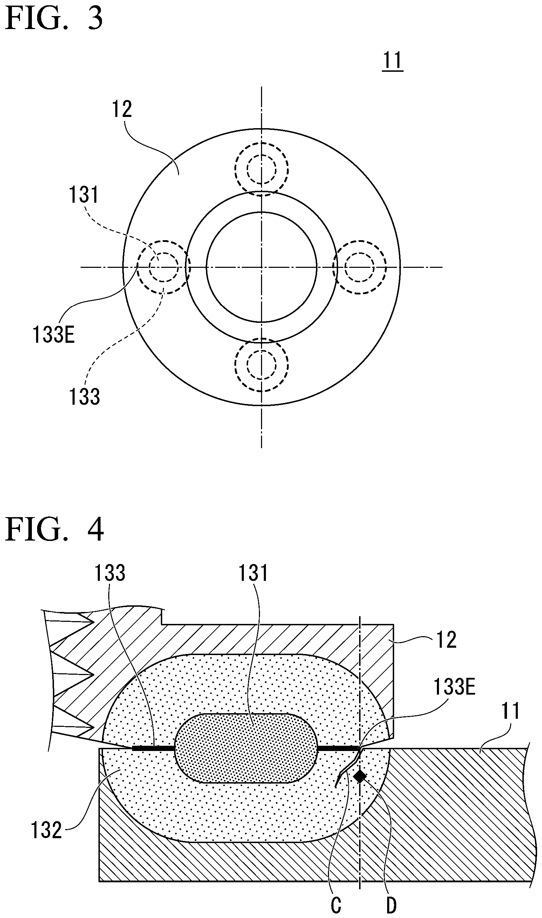

The present inventors investigated in detail the fracture mode of a projection welded joint in which hydrogen embrittlement cracks are generated. As a result, it has been found that a crack C in a weld is very often generated, as illustrated in FIG. 4, from an end portion of the corona bond area 133 (pressure-contact surface) formed around the melted and solidified portion 131 or the vicinity of the end portion as a starting point. Furthermore, it has also been found that in plane view of a projection welded joint along the direction perpendicular to a surface of a steel sheet, cracks are easily generated at a welding end portion at an outer side of a steel member.

The main factors that affect the hydrogen brittleness of a steel are generally considered to be the strength of the steel, the stress applied to the steel, and the hydrogen that has entered the steel. Therefore, the present inventors have attempted to reduce the surface layer hardness of the steel sheet 11 at the outer end portion 133E of the corona bond area 133.

Here, as illustrated in the cross-sectional view of the weld in FIG. 2, the outer end portion 133E of the corona bond area 133 is an end portion positioned at an outer side of the steel member 12 between both ends of the corona bond area 133. The cross section in which the outer end portion 133E is specified is a cross section that passes through a line connecting the center of one of a plurality of the projection welds 13 and the center of the plurality of the projection welds 13 and is perpendicular to the surface of the steel sheet 11. In a case where these projection welds 13 are provided at rotationally symmetric positions, the center of the plurality of the projection welds 13 is the rotation center. In a case where these projection welds 13 are provided at rotationally asymmetric positions, the center of the plurality of the projection welds 13 is the center of a fastening component included in the steel member 12. For example, in the case of the steel member 12 having a nut shape, the center of the through hole of the nut is regarded as the center of the plurality of the projection welds 13. In the case of the steel member 12 having a bolt shape, the center axis of the bolt is regarded as the center of the plurality of the projection welds 13. The line connecting the center of the projection weld 13 itself and the center of the plurality of the projection welds 13 is, for example, an alternate long and short dash line illustrated in the plan view of FIG. 3. The center of each of the plurality of the projection welds 13 and the center of the plurality of the projection welds 13 are specified in plane view along the direction perpendicular to the surface of the steel sheet 11. Hereinafter, unless otherwise specified, the phrase "cross section that passes through a line connecting the center of one of a plurality of projection welds and the center of the plurality of projection welds and is perpendicular to the surface of the steel sheet" is simply described as "cross section". The outer end portion 133E defined as described above is a portion farthest from the center of the plurality of the projection welds 13.

As a result of an attempt to reduce the surface layer hardness of the steel sheet 11 at the outer end portion 133E of the corona bond area 133, the present inventors achieved significant suppression of the generation frequency of hydrogen embrittlement cracks. This method prevents an increase in tact time and restrictions on nut shape and welding conditions. Furthermore, this method does not need softening of the inside of the steel sheet 11, so that the tensile strength of the steel sheet 11 can be kept high. In addition, this method does not need uniformization of the welding conditions and the like in the plurality of the projection welds 13. Even if the states of the plurality of the projection welds 13 are greatly different, the projection welded joint 1 according to the present embodiment is capable of suppressing hydrogen embrittlement cracks in all of the plurality of the projection welds 13.

Next, a specific constitution of the projection welded joint 1 according to the present embodiment will be described. The projection welded joint 1 includes the steel sheet 11, the steel member 12 joined to a surface of the steel sheet 11, and the projection weld 13 joining the steel sheet 11 and the steel member 12.

The projection weld 13 includes the melted and solidified portion 131 and includes the corona bond area 133 and a heat affected zone 132 that are formed around the melted and solidified portion 131. The melted and solidified portion 131 is a portion generated when the steel sheet 11 and the steel member 12 are once melted by projection welding and then solidified. The heat affected zone (HAZ) 132 means a portion of an unmelted base metal including the steel sheet 11, the steel member 12, and the like each having the microstructure, a metallurgical property, a mechanical property, and the like changed by welding heat. The corona bond area 133 is a solid-phase joint portion formed around the melted and solidified portion 131 between the steel member 12 and the steel sheet 11. The corona bond area 133 is a solid-phase joint portion similar to a corona bond formed in a ring shape around a nugget in a spot-welding portion. The corona bond area 133 may also be referred to as a pressure-contact portion or a pressure-contact surface.

In the present embodiment, a portion outside the heat affected zone 132 in the steel sheet 11 is referred to as a base material portion 111 of the steel sheet 11. The base material portion 111 of the steel sheet 11 may be simply referred to as "base material portion 111".

### (Steel Sheet 11)

The steel sheet 11 is a steel sheet having a carbon content at the thickness center of 0.25 mass% or more, or a steel sheet having a carbon content inside the base material portion 111 of 0.25 mass% or more. Such a steel sheet can enhance collision-resistant performance of the projection welded joint 1 and a component for a vehicle to which the projection welded joint 1 is applied. The carbon content at the thickness center in the steel sheet 11 or the carbon content inside the base material portion 111 in the steel sheet 11 may be 0.27 mass% or more, 0.30 mass% or more, more than 0.30 mass%, 0.31 mass% or more, 0.32 mass% or more, 0.33 mass% or more, 0.34 mass% or more, or 0.35 mass% or more.

Those skilled in the art recognize that a steel sheet having a carbon content of more than 0.30 mass% is very likely to crack during projection welding. However, in the projection welded joint 1 according to the present embodiment, hydrogen embrittlement of the weld is suppressed. Therefore, in the projection welded joint 1 according to the present embodiment, the carbon content in the steel sheet 11 can be increased to more than 0.30 mass%.

Meanwhile, the carbon content in the surface layer of the steel sheet 11 is not particularly limited. As described below, a softened layer may be provided on the surface of the steel sheet 11. Other constitutions of the steel sheet 11 are not particularly limited, and preferred examples will be described below.

The chemical composition of the steel sheet 11 is not particularly limited except for the carbon content at the thickness center (or inside the base material portion 111). For example, the chemical composition of the steel sheet 11 may contain, by unit mass%, Si: 2.00% or less, Mn: 0.05 to 5.00%, P: 0.100% or less, and S: 0.0100% or less, other than carbon at the thickness center (or inside the base material portion 111). In this case, the remainder of the chemical composition contains Fe and an impurity.

The tensile strength of the steel sheet 11 is not particularly limited, and may be, for example, 980 MPa or more, 1200 MPa or more, or 1500 MPa or more. The steel sheet 11 may be a hot stamped steel sheet, that is, a steel sheet (steel member) manufactured by hot stamping. Alternatively, the steel sheet 11 may be a steel sheet for hot stamping before being subjected to hot stamping. In the projection welded joint 1 according to the present embodiment, the "steel sheet" is a concept including not only steel having a sheet shape as a whole but also steel having a sheet shape only partially, such as a member having a flange section.

The steel sheet 11 may have a coating layer on its surface. Examples of the coating layer include hot-dip galvanizing, alloying hot-dip galvanizing, and aluminum coating. Thus, the corrosion resistance of the projection welded joint 1 can be enhanced.

The thickness of the steel sheet 11 is also not particularly limited. For example, in the case of using the projection welded joint 1 as a component for a vehicle, the thickness of the steel sheet 11 may be set within a range of 0.5 to 3.0 mm. In general, the larger the thickness of the steel sheet 11 is, the larger the stress applied to the projection weld 13 in a cooling process after projection welding is, and the more easily hydrogen embrittlement cracks are generated. However, in the projection welded joint according to the present embodiment, hydrogen embrittlement cracks can be suppressed by softening the outer end portion 133E of the corona bond area 133 as described below. Furthermore, for example, two or more overlaid steel sheets may be subjected to projection welding. In this case, hydrogen embrittlement cracks can be suppressed by softening the outer end portion 133E of the corona bond area 133 on the steel sheet in contact with the steel member.

As illustrated in FIG. 1, a through hole may be provided in the steel sheet 11. In a case where the steel member 12 is a nut, a bolt can be attached to the projection welded joint 1 so as to penetrate the projection welded joint 1 by axially aligning the hole of the nut and the through hole. Meanwhile, the steel sheet 11 may be a flat sheet.

### (Steel Member 12)

The steel member 12 is a mechanical component formed of steel and joined to a surface of the steel sheet 11. The steel member 12 has a plurality of projection portions before projection welding. These projection portions are pressurized against the steel sheet 11 during projection welding to form a current path. Then, the projection portion concentrates current on the contact surface between each of the plurality of projection portions and the steel sheet 11 to form a projection weld 13 joining the steel member 12 and the steel sheet 11. In order to uniformize the joining state of the projection weld 13, the plurality of projection portions of the steel member 12 before projection welding are preferably disposed at rotationally symmetric positions. Therefore, the projection welds 13 formed on the steel member 12 after projection welding are preferably provided at rotationally symmetric positions in plane view along the direction perpendicular to the surface of the steel sheet 11 as illustrated in FIG. 3. The detailed constitution of the projection weld 13 is as described above.

For reliable joining of the steel member 12 to the steel sheet 11, the number of projection portions is 2 or more. For example, the number of projection portions may be 3, 4, 5, or 6. As described below, the number of projection portions is most preferably 3 from the viewpoint of uniformizing the contact state between each of the plurality of projection portions and the steel sheet 11. Thus, the number of projection welds 13 can be 2, 3, 4, 5, or 6.

The shape of the steel member 12 is not particularly limited. For example, in the case of using the projection welded joint 1 as a component for a vehicle, the steel member 12 is preferably a bolt or a nut. However, various shapes can be applied to the steel member 12 depending on use of the projection welded joint 1. The strength, the chemical composition, and the like of the steel member 12 are also not particularly limited. For example, the material of the steel member 12 may be S10C, S25C, SWCH, or the like.

### (Hardness of Outer End Portion 133E of Corona Bond Area 133)

In the projection weld 13 between the steel member 12 and the steel sheet 11, the melted and solidified portion 131 and the heat affected zone 132 are formed. From various experiments by the present inventors, as illustrated in FIG. 4, it has been found that hydrogen embrittlement cracks are easily generated in the surface layer of the steel sheet 11 at the outer end portion 133E of the corona bond area 133. Here, as illustrated in FIGS. 2 and 3, the outer end portion 133E of the corona bond area 133 is an end portion positioned at an outer side of the steel member 12 between both ends of the corona bond area 133 in the cross section of the projection weld 13.

Therefore, in the projection welded joint 1 according to the present embodiment, the "hardness of the outer end portion 133E of the corona bond area 133" is defined as the Vickers hardness of the surface layer area of the steel sheet 11 at the outer end portion 133E of the corona bond area 133 between the steel member 12 and the steel sheet 11 measured in the cross section of the projection weld 13. The hardness of the outer end portion 133E of the corona bond area 133 is lower than the hardness at the position of 1/4 of the sheet thickness of the steel sheet outside the corona bond area 133. The hardness of the outer end portion 133E of the corona bond area 133 is preferably lower than the Vickers hardness at the position of 1/4 of the sheet thickness of the base material portion 111 of the steel sheet 11. The higher the strength of steel is, the more easily hydrogen embrittlement cracks are generated. Therefore, hydrogen embrittlement cracks can be prevented by softening steel at a portion to be a starting point of the hydrogen embrittlement cracks.

This requirement is satisfied in all of the plurality of the projection welds 13. That is, in all of the cross sections of the plurality of the projection welds 13, the hardness of the outer end portion 133E of the corona bond area 133 is lower than the hardness at the position of 1/4 of the sheet thickness of the steel sheet 11 outside the corona bond area 133. In all of the cross sections of the plurality of the projection welds 13, the hardness of the outer end portion 133E of the corona bond area 133 is preferably lower than the Vickers hardness at the position of 1/4 of the sheet thickness of the base material portion 111 of the steel sheet 11. Thus, hydrogen embrittlement cracks are suppressed in all of the projection welds 13, and the joining strength of the steel member 12 can be kept extremely high.

An absolute value of the difference between the hardness of the outer end portion 133E of the corona bond area 133 and the hardness at the position of 1/4 of the sheet thickness of the steel sheet outside the corona bond area 133 is ΔHv, which may be more than 0 Hv in all of the projection welds 13. ΔHv is preferably 10 Hv or more, 30 Hv or more, 50 Hv or more, or 100 Hv or more in all of the projection welds 13. The upper limit of ΔHv is not necessary to be defined because larger ΔHv is more preferable, but, for example, ΔHv may be 250 Hv or less, 200 Hv or less, or 150 Hv or less in all of the projection welds 13 in order to maintain the steel sheet strength. The above-described ΔHv may be defined as the absolute value of the difference between the hardness of the outer end portion 133E of the corona bond area 133 and the hardness at the position of 1/4 of the sheet thickness of the base material portion 111 of the steel sheet 11.

Furthermore, the absolute value of the hardness of the outer end portion 133E of the corona bond area 133 may be defined. Specifically, the Vickers hardness of the outer end portion 133E of the corona bond area 133 may be 700 Hv or less, 650 Hv or less, or 600 Hv or less in all of the welds. Thus, hydrogen embrittlement cracks in the welds can be further effectively suppressed.

The method of making the outer end portion 133E of the corona bond area 133 softer than the position of 1/4 of the sheet thickness of the steel sheet outside the corona bond area 133 (or thickness 1/4 portion of the base material portion 111 of the steel sheet 11) is not particularly limited. For example, the steel sheet 11 subjected to a surface layer softening treatment such as a surface layer decarburization treatment is subjected to projection welding, and thus the difference ΔHv can be more than 0 Hv between the Vickers hardness at the outer end portion 133E of the corona bond area 133 and the Vickers hardness at the position of 1/4 of the sheet thickness of the steel sheet outside the corona bond area 133 (or thickness 1/4 portion of the base material portion 111 of the steel sheet 11). Therefore, in the projection welded joint 1 according to the present embodiment, the steel sheet 11 may have a softened layer. The softened layer is, for example, a decarburized layer. Hereinafter, in the softened layer, the softened layer depth is defined as the depth of a region having a hardness lower by 5% or more than the hardness at the position of 1/4 of the sheet thickness of the steel sheet 11 (particularly preferably, the base material portion 111 of the steel sheet 11). In other words, the hardness of the softened layer is 95% or less of the hardness at the position of 1/4 of the sheet thickness of the steel sheet 11 (particularly preferably, the base material portion 111 of the steel sheet 11).

The softened layer may be provided on both surfaces of the steel sheet 11, or may be provided only on the side of the surfaces of the steel sheet 11, which is in contact with the steel member 12.

The steel sheet 11 preferably has the softened layer in a range from the surface, on the side to which the steel member 12 is joined, to at least a depth of 20 µm. For example, the softened layer depth of the steel sheet 11 may be, for example, 25 µm or more, 30 µm or more, 40 µm or more, or 50 µm or more. The softened layer depth of the steel sheet 11 may be 200 µm or less, 190 µm or less, 80 µm or less, or 150 µm or less.

Alternatively, the steel sheet 11 may include a portion having a hardness of 95% of the hardness at the position of 1/4 of the sheet thickness of the steel sheet 11, in a range from the surface on the side to which the steel member 12 is joined to a depth of 20 µm to 200 µm. In this case, the softened layer depth is in the range of 20 µm or more and 200 µm or less, and the effect of suppressing hydrogen embrittlement cracks is further enhanced.

The smaller the hardness of the softened layer is, the higher the effect of suppressing hydrogen embrittlement cracks is. Therefore, the softened layer depth may be defined as the depth of a region having a hardness lower by 8% or more, 10% or more, or 12% or more than the hardness at the position of 1/4 of the sheet thickness of the base material portion 111, and then the above-described numerical value of the softened layer depth may be applied.

Meanwhile, a method other than a surface layer softening treatment (such as a surface layer decarburization treatment) can be used in order to set ΔHv to more than 0 Hv. For example, ΔHv can be more than 0 Hv also in the case of softening only the surface layer of the steel sheet 11 by controlling the number density of precipitates. Furthermore, ΔHv can be more than 0 Hv by forming the steel sheet 11 as a multilayer steel sheet obtained by combining mild steel and high-strength steel, or by tempering only the surface layer of the steel sheet.

The projection welded joint 1 according to the present embodiment may include a plurality of the projection welds 13, and thus may include a plurality of the melted and solidified portions 131. The welding states in the plurality of the projection welds 13 may be non-uniform. For example, a cross-sectional area of the first melted and solidified portion in the cross section along the sheet thickness direction of the steel sheet 11 may be 1.5 times or more the cross-sectional area of the second melted and solidified portion in the cross section along the sheet thickness direction of the steel sheet 11. The first melted and solidified portion is any melted and solidified portion in the projection welded joint 1 including the plurality of the melted and solidified portions 131. The second melted and solidified portion is any melted and solidified portion in the projection welded joint 1 including the plurality of the melted and solidified portions 131, and is a melted and solidified portion having a smaller cross-sectional area than the first melted and solidified portion.

Alternatively, the ratio Amax/Amin, which is the ratio between the absolute maximum value Amax of the cross-sectional areas of the melted and solidified portions 131 and the absolute minimum value Amin of the cross-sectional areas of the melted and solidified portions 131 in the projection welds 13, may be 1.5 or more.

Here, the cross-sectional areas of the melted and solidified portions 131 are measured in a plurality of cross sections that respectively pass through the lines connecting the centers of the plurality of welds and the center of the plurality of welds and are perpendicular to the surface of the steel sheet. Amax and Amin can be specified by measuring the cross-sectional areas of the melted and solidified portions 131 in the plurality of cross sections. In a case where the projection welds 13 are provided at rotationally symmetric positions in plane view along the direction perpendicular to the surface of the steel sheet 11, the cross-sectional areas of the melted and solidified portions 131 are measured in a plurality of cross sections that respectively pass through the lines connecting the centers of the plurality of projection welds 13 and the rotation center of the plurality of projection welds 13 and are perpendicular to the surface of the steel sheet 11.

The cross-sectional area of the melted and solidified portion 131 is an index of the amount of heat input at the projection weld 13. In a case where the first melted and solidified portion and the second melted and solidified portion have the same cross-sectional area, or in a case where Amax/Amin is 1, it is highly probable that the plurality of projection welds 13 are manufactured under the completely same welding condition. However, the plurality of projection welds 13 are difficult to manufacture under the same condition. The states of the plurality of projection welds 13 vary due to disturbance factors such as the surface state of the steel sheet 11 during projection welding, strain of the steel sheet 11, a deviation in welding pressure applied to the steel member 12, and a dimensional error of a projection portion of the steel member 12. In this case, a residual stress is generated among the plurality of projection welds 13, and this residual stress may cause hydrogen embrittlement cracks.

A larger value obtained by dividing the cross-sectional area of the first melted and solidified portion by the cross-sectional area of the second melted and solidified portion is more disadvantageous from the viewpoint of suppressing hydrogen embrittlement cracks in the welds 13. Meanwhile, in a case where the cross-sectional area of the first melted and solidified portion is allowed to be 1.5 times or more the cross-sectional area of the second melted and solidified portion, projection welding can be easily performed, and the projection welded joint 1 according to the present embodiment can be applied to various components. In the projection welded joint 1 according to the present embodiment, even if the cross-sectional area of the first melted and solidified portion is 1.5 times or more the cross-sectional area of the second melted and solidified portion, hydrogen embrittlement cracks can be suppressed by setting ΔHv to more than 0 Hv. Therefore, in the projection welded joint 1 according to the present embodiment, the cross-sectional area of the first melted and solidified portion is preferably 1.5 times or more the cross-sectional area of the second melted and solidified portion. The cross-sectional area of the first melted and solidified portion may be 1.6 times or more, 1.8 times or more, or 2.0 times or more the cross-sectional area of the second melted and solidified portion.

Similarly, larger Amax/Amin is more disadvantageous from the viewpoint of suppressing hydrogen embrittlement cracks in the welds 13. Meanwhile, in a case where Amax/Amin is allowed to be 1.5 or more, projection welding can be easily performed, and the projection welded joint 1 according to the present embodiment can be applied to various components. In the projection welded joint 1 according to the present embodiment, even if Amax/Amin is 1.5 or more, hydrogen embrittlement cracks can be suppressed by setting ΔHv to more than 0 Hv. Therefore, in the projection welded joint 1 according to the present embodiment, Amax/Amin is preferably 1.5 or more. Amax/Amin may be 1.6 or more, 1.8 or more, or 2.0 or more.

### (Method of Measuring Carbon Content, Vickers Hardness, Softened Layer Depth, and Cross-Sectional Area of Melted and Solidified Portion)

The carbon content inside the base material portion 111 of the steel sheet 11 can be specified by grinding the surface layer of the base material portion 111 of the steel sheet 11 by 0.3 mm or more and measuring a component of the resulting ground surface by a combustion method (infrared absorbing method), a spectroscopic analysis method, or X-ray fluorescence analysis. The carbon content at the thickness center of the steel sheet 11 can be specified by grinding the surface layer of the steel sheet 11 by about t/2 mm (t represents the sheet thickness of the steel sheet 11) and measuring a component of the resulting ground surface by a combustion method (infrared absorbing method), a spectroscopic analysis method, or X-ray fluorescence analysis. The carbon content inside the base material portion 111 of the steel sheet 11 often coincides with the carbon content at the thickness center of the steel sheet 11.

The hardness of the outer end portion 133E of the corona bond area 133 (that is, Vickers hardness of the surface layer area of the steel sheet 11 at the outer end portion 133E of the corona bond area 133) can be specified with the following method. First, the projection weld 13 is cut along the plane that passes through the line connecting the center of the projection weld 13 itself and the center of the plurality of the projection welds 13 and is perpendicular to the surface of the steel sheet 11. In a case where the projection welds 13 are provided at rotationally symmetric positions in plane view along the direction perpendicular to the surface of the steel sheet 11, the projection weld 13 is cut along the plane that passes through the line connecting the center of the projection weld 13 itself and the rotation center of the plurality of the projection welds 13 and is perpendicular to the surface of the steel sheet 11. For example, a cross section passing through an alternate long and short dash line illustrated in FIG. 3 is the plane that passes the center of the projection weld 13 itself and the center of the projection welds 13.

Next, the cut plane is appropriately prepared to specify the outer end portion 133E of the corona bond area 133. In the corona bond area 133, the steel sheet 11 and the steel member 12 are solid-phase joined, but a slight gap is present between the steel sheet 11 and the steel member 12 outside the corona bond area 133. An end of the gap is an end portion of the corona bond area 133. The cut plane includes two end portions of the corona bond area 133, and between these end portions, the end portion farther from the center of the steel member 12 is the outer end portion 133E of the corona bond area 133.

The hardness is measured by the Vickers test. Therefore, the hardness is the Vickers hardness. The Vickers test is performed in accordance with JIS Z 2244:2009. The measurement depth is 20 µm. That is, the Vickers test is performed so as to form the center of a recess D at a position 20 µm deep from the surface.

The hardness at the position of 1/4 of the sheet thickness of the steel sheet 11 outside the corona bond area 133 is also measured in accordance with JIS Z 2244:2009. The measurement plane is a cross section that passes through a line connecting the center of one of the plurality of the projection welds 13 and the center of the plurality of the projection welds 13 and is perpendicular to the surface of the steel sheet 11. The position of 1/4 of the sheet thickness is a position at a depth of 1/4 of the thickness of the steel sheet from the surface of the steel sheet. Therefore, the measurement position is a position at a depth of about 1/4 of the thickness t of the steel sheet 11 from the surface of the steel sheet 11. The measurement position is outside the projection weld 13.

Note that the HAZ softened portion outside the HAZ hardened portion may be not clearly visible even when etched. Meanwhile, the width of the HAZ softened portion is about 2 to 3 mm, and therefore the hardness of the base material portion can be reliably measured by measuring the Vickers hardness at the position of 1/4 of the sheet thickness at a position sufficiently away (for example, 5 mm or more) from the outer edge of the HAZ 132 that is visually recognized when etched.

In measurement of the Vickers hardness at the surface layer area and the position of 1/4 of the sheet thickness, the test force is set to 10 gf. Thus, the two measured values can be compared.

The presence or absence of the softened layer can be easily determined by analyzing and comparing the carbon concentrations of the surface layer and the inside of the steel sheet 11. The softened layer depth of the steel sheet 11 is specified on the basis of the Vickers hardness distribution in the depth direction of the steel sheet 11. The Vickers hardness is continuously measured from the surface toward the inside of the steel sheet 11. If the steel sheet 11 has a softened layer, the Vickers hardness is higher at a deeper measurement point. In the surface layer of the steel sheet 11, a region having a Vickers hardness lower by 5% or more than the Vickers hardness at the position of 1/4 of the sheet thickness of the steel sheet 11 is regarded as a softened layer, and the thickness of this region is regarded as the softened layer depth. That is, in the surface layer of the steel sheet 11, a region having a Vickers hardness of 95% or less of the Vickers hardness at the position of 1/4 of the sheet thickness of the steel sheet is regarded as a softened layer, and the thickness of this region is regarded as the softened layer depth.

The cross-sectional area of the melted and solidified portion 131 is specified by cross section observation. The measurement plane of the cross-sectional area is a cross section that passes through a line connecting the center of one of the plurality of the projection welds 13 and the rotation center of the plurality of the projection welds 13 and is perpendicular to the surface of the steel sheet 11. The cross section is subjected to metal flow corrosion, and thus the melted and solidified portion 131 is revealed. A region where dendrite is observed is regarded as the melted and solidified portion 131. The melted and solidified portion 131 is microphotographed, and the photograph is analyzed to specify the cross-sectional area of the melted and solidified portion 131.

### (Component for Vehicle)

Next, a component for a vehicle according to the present embodiment will be described below. The component for a vehicle according to the present embodiment includes the projection welded joint 1 according to the embodiment described above. Thus, the component for a vehicle according to the present embodiment includes a steel member and a steel sheet having an internal (thickness center) carbon content of 0.25 mass% or more, and is excellent in hydrogen embrittlement crack resistance. Examples of the component for a vehicle include a side sill, a front-side member reinforcement, a B-pillar, a B-pillar hinge reinforcement (including a patch), a B-pillar lower, an A-pillar lower, and a bumper reinforcement.

### (Method for Manufacturing Projection Welded Joint)

Next, a method for manufacturing the projection welded joint 1 according to the present embodiment will be described. The method for manufacturing the projection welded joint 1 according to the present embodiment includes pressing a projection portion of a steel member 12 against a steel sheet 11 and energizing the projection portion to perform projection welding, and in the method, the steel sheet 11 has a carbon content at a thickness center of 0.25 mass% or more, the steel sheet 11 includes a softened layer in a range from a surface, on a side against which the projection portion is pressed, to a depth of 20 µm, and the softened layer has a hardness of 95% or less of a hardness at a position of 1/4 of a sheet thickness of the steel sheet 11. Thus, the method for manufacturing according to the present embodiment can suppress hydrogen embrittlement cracks in the projection weld 13.

A method of making the hardness of an outer end portion 133E of a corona bond area 133 (that is, Vickers hardness of a surface layer area of the steel sheet 11 at the outer end portion 133E of the corona bond area 133) lower than the hardness at the position of 1/4 of the sheet thickness of the steel sheet 11 outside the corona bond area 133 (or Vickers hardness of a thickness 1/4 portion of a base material portion 111 of the steel sheet 11) is not particularly limited. For example, a softened layer is preferably provided on the surface of the steel sheet 11. This softened layer preferably includes a region having a hardness lower by 5% or more than the Vickers hardness at the position of 1/4 of the sheet thickness of the steel sheet 11 and having a depth of 5 to 200 µm. Furthermore, it is preferable that the steel sheet 11 include a softened layer in a range from the surface, on the side against which the projection portion is pressed, to a depth of 20 µm and the softened layer have a hardness of 95% or less of the hardness at the position of 1/4 of the sheet thickness of the steel sheet 11. It is more preferable that the steel sheet 11 include a portion having a hardness of 95% of the hardness at the position of 1/4 of the sheet thickness of the steel sheet 11, in a range from the surface on the side against which the projection portion is pressed to a depth of 20 µm to 200 µm. A more preferable aspect of the softened layer provided as an exemplary example of the projection welded joint can also be applied to the method for manufacturing the projection welded joint.

The projection welding conditions are as follows. The welding pressure is, for example, preferably 200 to 600 kgf. The lower limit of the welding pressure is more preferably 300 kgf. The upper limit of the welding pressure is more preferably 500 kgf. The welding current is, for example, preferably 8 to 15 kA. The lower limit of the welding current is more preferably 10 kA. The energization time is, for example, preferably 100 to 300 msec. The lower limit of the energization time is more preferably 120 msec (in a case where the frequency of the AC power supply is 50 Hz, 6 cyc). The upper limit of the energization time is more preferably 300 msec (in a case where the frequency of the AC power supply is 50 Hz, 15 cyc).

The constitutions of the steel member 12 and the steel sheet 11 are not particularly limited. For example, the constitution of the projection welded joint 1 according to the present embodiment described above can be applied to the method for manufacturing according to the present embodiment.

### Examples

An effect of one aspect of the present disclosure will be described more specifically with reference to Examples. However, the conditions in Examples are merely one condition example adopted to confirm the feasibility and an effect of the present disclosure. The present disclosure is not limited to this one condition example. The present disclosure can adopt various conditions as long as the object of the present disclosure is achieved without departing from the gist of the present disclosure.

Various projection welded joints were manufactured by projection welding of a steel member to various steel sheets.

A steel sheet was heated to 900°C and held for 4 minutes before projection welding, and then hot-stamped for a bottom dead point holding time of 1 minute. In a non-plated steel sheet, a scale was removed by shot blast. Table 1 shows the sheet thickness of each steel sheet, the carbon content at the thickness center of each steel sheet, the surface treatment method of each steel sheet, and the softened layer depth of each steel sheet. The softened layer depth described in Table 1 is the depth of a region having a hardness lower by 5% or more than the Vickers hardness at the position of 1/4 of the sheet thickness of the base material portion. Each steel member was an M8 square nut having four projection portions for projection welding. The carbon content at the thickness center of each steel sheet was the same as the carbon content inside the base material portion of each steel sheet.

The welding conditions were as follows. One cycle was 1/60 seconds.
- Welding pressure: 300 kgf
- Energization time: 8 cycles
- Welding current: 13 kA
- Holding time: 30 cycles

After the projection welding was finished, in the cross sections of the four welds, measurement with a measurement load of 10 gf was performed to determine the hardness at the outer end portion of the corona bond area (that is, Vickers hardness of the surface layer area of the steel sheet at the outer end portion of the corona bond area) and the hardness at the position of 1/4 of the sheet thickness of the steel sheet outside the corona bond area (that is, Vickers hardness at the position of 1/4 of the sheet thickness of the base material portion of the steel sheet), and the absolute value ΔHv of the difference between these hardness values was calculated. Table 1 shows the results of measuring the hardness in the weld having the maximum Vickers hardness of the surface layer area of the steel sheet at the outer end portion of the corona bond area. In a case where the Vickers hardness of the surface layer area of the steel sheet at the outer end portion of the corona bond area was larger than the Vickers hardness at the position of 1/4 of the sheet thickness of the base material portion of the steel sheet, description of ΔHv was omitted.

In the cross sections of the four welds, the cross-sectional area of the melted and solidified portion was measured, and the ratio Amax/Amin between the absolute maximum value Amax and the absolute minimum value Amin of the cross-sectional area was calculated. Table 1 describes the ratio Amax/Amin. Amax can be regarded as the cross-sectional area of the first melted and solidified portion in the cross section along the sheet thickness direction of the steel sheet, and Amin can be regarded as the cross-sectional area of the second melted and solidified portion in the cross section along the sheet thickness direction of the steel sheet.

In the cross sections of the projection welds, the presence or absence of hydrogen cracks was confirmed. The column of "Number of cracks" in Table 1 describes the number of projection welds in which cracks were generated. The column of "Hydrogen embrittlement cracks" in Table 1 states "Failed" for a projection welded joint having a number of cracks of 1 or more, and describes "Passed" for a projection welded joint having a number of cracks of 0.

**[Table 1]**

| No | | Sheet thickness of steel sheet | Carbon content at thickness center | Kind of coating | Surface treatment method of steel sheet | Softened layer depth | ΔHv | Hardness at outer end portion of corona bond area | Hardness at position of 1/4 of sheet thickness | Amax/ Amin | Hydrogen embrittlement cracks | Number of cracks |
|---|---|---|---|---|---|---|---|---|---|---|---|---|
| | | mm | mass% | | | µm | Hv | Hv | Hv | | | |
| 1 | Comparative Example | 3.0 | 0.30 | Non-coating | - | - | - | 603 | 589 | 2.7 | Failed | 1/4 |
| 2 | Comparative Example | 2.3 | 0.35 | Non-coating | - | - | - | 621 | 613 | 3.6 | Failed | 2/4 |
| 3 | Comparative Example | 1.6 | 0.45 | Non-coating | - | - | - | 737 | 724 | 1.7 | Failed | 2/4 |
| 4 | Comparative Example | 1.6 | 0.45 | Non-coating | - | - | - | 737 | 724 | 2.1 | Failed | 3/4 |
| 5 | Comparative Example | 1.6 | 0.45 | Non-coating | - | - | - | 737 | 724 | 3.6 | Failed | 4/4 |
| 6 | Example | 3.0 | 0.30 | Non-coating | Decarburization | 35 | 23 | 566 | 589 | 1.7 | Passed | 0/4 |
| 7 | Example | 2.3 | 0.35 | Non-coating | Decarburization | 35 | 28 | 585 | 613 | 2.2 | Passed | 0/4 |
| 8 | Example | 1.6 | 0.45 | Non-coating | Decarburization | 35 | 33 | 691 | 724 | 1.2 | Passed | 0/4 |
| 9 | Example | 3.0 | 0.30 | Non-coating | Decarburization | 71 | 67 | 536 | 589 | 3.1 | Passed | 0/4 |
| 10 | Example | 2.3 | 0.35 | Non-coating | Decarburization | 71 | 55 | 566 | 613 | 2.5 | Passed | 0/4 |
| 11 | Example | 2.3 | 0.35 | Non-coating | Decarburization | 106 | 92 | 521 | 613 | 2.5 | Passed | 0/4 |
| 12 | Example | 2.3 | 0.35 | Zinc coating | Decarburization | 106 | 96 | 520 | 616 | 4.1 | Passed | 0/4 |
| 13 | Example | 2.3 | 0.35 | Al coating | Decarburization | 106 | 101 | 510 | 611 | 3.3 | Passed | 0/4 |
| 14 | Example | 3.2 (two 1.6 mm thick overlaid) | 0.35 | Non-coating | Decarburization | 106 | 99 | 522 | 621 | 1.9 | Passed | 0/4 |
| 15 | Example | 1.6 | 0.45 | Non-coating | Decarburization | 71 | 76 | 648 | 724 | 1.3 | Passed | 0/4 |
| 16 | Example | 1.6 | 0.45 | Non-coating | Decarburization | 106 | 127 | 591 | 724 | 1.6 | Passed | 0/4 |
| 17 | Example | 1.6 | 0.45 | Non-coating | Decarburization | 106 | 129 | 591 | 724 | 2.1 | Passed | 0/4 |
| 18 | Example | 1.6 | 0.45 | Non-coating | Decarburization | 106 | 133 | 591 | 724 | 3.9 | Passed | 0/4 |
| 19 | Example | 1.6 | 0.45 | Non-coating | Decarburization | 106 | 131 | 591 | 724 | 4.7 | Passed | 0/4 |

Examples No. 1 to 5 are Comparative Examples in which the Vickers hardness of the surface layer area of the steel sheet at the outer end portion of the corona bond area was higher than the Vickers hardness at the position of 1/4 of the sheet thickness of the base material portion of the steel sheet. In these Examples, hydrogen embrittlement cracks were generated in one or more welds.

In contrast, Examples No. 6 to 19 are Examples of the present disclosure in which the Vickers hardness of the surface layer area of the steel sheet at the outer end portion of the corona bond area was lower than the Vickers hardness at the position of 1/4 of the sheet thickness of the base material portion of the steel sheet. In these Examples, hydrogen embrittlement was suppressed in all of the welds.

### Reference Signs List

1 Projection welded joint
11 Steel sheet
111 Base material portion
12 Steel member
13 Projection weld (weld)
131 Melted and solidified portion
132 Heat affected zone
133 Corona bond area (pressure-contact surface)
133E Outer end portion of corona bond area (pressure-contact surface)
D Recess

## Claims

1. A projection welded joint comprising:
a steel sheet;
a steel member; and
a projection weld joining the steel sheet and the steel member, wherein
the projection weld includes a melted and solidified portion and a corona bond area around the melted and solidified portion,
the steel sheet has a carbon content at a thickness center of 0.25 mass% or more, and
the corona bond area includes an outer end portion having a hardness lower than a hardness at a position of 1/4 of a sheet thickness of the steel sheet outside the corona bond area.

2. The projection welded joint according to claim 1, wherein
the steel sheet includes a softened layer in a range from a surface to a depth of 20 µm, the surface on a side to which the steel member is joined, and
the softened layer has a hardness of 95% or less of the hardness at the position of 1/4 of the sheet thickness of the steel sheet.

3. The projection welded joint according to claim 2, wherein
the steel sheet includes a portion in a range from the surface on the side to which the steel member is joined to a depth of 20 µm to 200 µm, the portion having a hardness of 95% of the hardness at the position of 1/4 of the sheet thickness of the steel sheet.

4. The projection welded joint according to any one of claims 1 to 3, wherein
the outer end portion of the corona bond area has a Vickers hardness of 700 Hv or less.

5. The projection welded joint according to any one of claims 1 to 4, wherein
the projection welded joint includes a plurality of the melted and solidified portions, and
a cross-sectional area of a first melted and solidified portion in a cross section along a sheet thickness direction of the steel sheet is 1.5 times or more a cross-sectional area of a second melted and solidified portion in a cross section along the sheet thickness direction of the steel sheet.

6. A method for manufacturing the projection welded joint according to claim 1, the method comprising:
pressing a projection portion of a steel member against a steel sheet; and
energizing the projection portion to perform projection welding, wherein
the steel sheet has a carbon content at a thickness center of 0.25 mass% or more,
the steel sheet includes a softened layer in a range from a surface to a depth of 20 µm, the surface on a side against which the projection portion is pressed, and
the softened layer has a hardness of 95% or less of a hardness at a position of 1/4 of a sheet thickness of the steel sheet.

7. The method according to claim 6, wherein the steel sheet includes a portion in a range from the surface on the side against which the projection portion is pressed to a depth of 20 µm to 200 µm, the portion having a hardness of 95% of the hardness at the position of 1/4 of the sheet thickness of the steel sheet.
